(19) Europäisches Patentamt
European Patent Office
Office européen des brevets

(11) **EP 3 680 096 A1**

(12) **EUROPÄISCHE PATENTANMELDUNG**

(43) Veröffentlichungstag:
**15.07.2020 Patentblatt 2020/29**

(51) Int Cl.:
***B32B 5/24*** *(2006.01)*      ***B32B 5/26*** *(2006.01)*

(21) Anmeldenummer: **19151389.4**

(22) Anmeldetag: **11.01.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Ecoatech GmbH**
**86167 Augsburg (DE)**

(72) Erfinder: **Niederstadt, Rule**
**86167 Augsburg (DE)**

(74) Vertreter: **Reitstötter Kinzebach**
**Patentanwälte**
**Sternwartstrasse 4**
**81679 München (DE)**

(54) **FEUERHEMMENDES FLÄCHENELEMENT**

(57) Ein feuerhemmendes Flächenelement weist alternierenden Schichten (a) eines Mineralfaser-Flächengebildes und (b) einer Brandschutzmasse, welche ein organisches Bindemittel mit einem darin dispergierten intumeszierenden Material umfasst, auf. Die Mineralfaser-Flächengebilde sind Flächengebilde aus nicht verfestigten Basaltfasern. Die Brandschutzmasse ist eine verfestigte, geschäumte Polymerdispersion mit darin dispergiertem Blähgraphit. Das feuerhemmende Flächenelement weist ein geringes Raumgewicht, eine gute Isolierwirkung bei Temperaturen von 600°-1300°C auf und ist flexibel.

EP 3 680 096 A1

**Beschreibung**

Die vorliegende Erfindung betrifft ein mehrlagiges feuerhemmendes Flächenelement.

Um die Ausbreitung von Bränden zu verhindern oder zu verlangsamen, werden Gebäude, Züge, Schiffe in Brandschutzabschnitte unterteilt, die gegeneinander durch feuerhemmende Wände geschützt sind. Der Brand soll an der Ausbreitung gehindert werden, damit das Feuer erlischt oder Löschaktionen in einem Teilabschnitt unternommen werden können.

Bei mobilen Anwendungen, wie in Personenkraftwagen, Lastkraftwagen, Schiffen, Zügen und Flugzeugen oder Hubschraubern, sollen die Brandschutzwände ein möglichst geringes Eigengewicht besitzen und lange Feuerwiderstandswerte aufweisen.

Kompakte Materialien wie Mineralplatten, Metall oder Glas sind zwar nicht brennbar, haben aber ein hohes Raumgewicht und leiten die Wärme weiter. Sie sind als Brandschutzwand alleine nicht geeignet und sind zu schwer für mobile Anwendungen. Mineralische Fasern z.B. aus Glaswolle sind leicht und nicht brennbar, doch auch sie sind ungenügend in der Wärmeleitung.

Komposite-Materialien, bei denen Schichten mit unterschiedlichen Eigenschaften verwendet werden, können ebenfalls zur Flammhemmung verwendet werden.

Die DE 10 2016 225 906 A1 beschreibt ein Klebeband mit einer flammhemmenden Haftklebemasseschicht und einer stabilisierenden Gelegeschicht.

Die DE 10 2010 048 175 B4 beschreibt ein wärmedämmendes feuerfestes Formteil, welches mineralische Fasern und geblähtes Vulkangestein verwendet. Die DE 19833898 A1 beschreibt ein mehrschichtiges hitzebeständiges Gewebe, dessen Wirkung auf Hitzereflektion beruht.

Die DE 29613507 U1 beschreibt eine feuerhemmende Tür bei der die mineralische Faser als Dämmstoffeinlage dient.

Die DE 4142903 A1 beschreibt eine ökologische Brandschutzmasse, die anorganische Fasern, eine Polymerdispersion, Flammschutzmittel und Weichmacher verwendet, allerdings ohne Schichtaufbau und Angabe des Feuerwiderstands.

Die DE 3423700 C2 beschreibt ein feuerhemmendes Schichtelement, welches aus einem Harz, Carbonfasern und Füllstoffen aufgebaut ist.

Die CN 104847026 beschreibt eine mit Basaltfaservlies verstärkte Polyurethanschaumplatte. Der Polyurethanschaum umfasst 5 bis 15% Blähgraphit.

Es besteht Bedarf nach einem feuerhemmenden Flächenelement, welches ein geringes Raumgewicht aufweist, eine gute Isolierwirkung bei Temperaturen von 600°-1300°C besitzt und flexibel ist.

Die Aufgabe wird gelöst durch ein feuerhemmendes Flächenelement mit alternierenden Schichten

(a) eines Mineralfaser-Flächengebildes und
(b) einer Brandschutzmasse, welche ein organisches Bindemittel mit einem darin dispergierten intumeszierenden Material umfasst.

Das erfindungsgemäße feuerhemmende Flächenelement ist leicht und kann mit einem Raumgewicht von weniger als 1000 g/l, vorzugsweise weniger als 500 g/l ausgebildet werden. Es ist außerdem flexibel und formbar. Das erfindungsgemäße feuerhemmende Flächenelement ist als Rollenware auf- und abwickelbar. Aufgrund seines Schichtaufbaus kann es durch Auswahl der Anzahl an Schichten für unterschiedliche Beflammungszeiten angepasst werden, z.B. einen Feuerwiderstand von 30, 60, 90 oder 120 Minuten. Innerhalb der angegebenen Zeit darf bei einseitiger Beflammung des Elements die Oberflächentemperatur der nicht-beflammten Seite um nicht mehr als 140 K im Vergleich zur Temperatur vor der Beflammung ansteigen.

Mineralfaser-Flächengebilde sind nicht brennbar und weisen eine hohe Wärmeleitfähigkeit auf. Bei Brandeinwirkung auf die äußerste Schicht des Mineralfaser-Flächengebildes wird die Wärme abgeleitet und in der Fläche verteilt. Das Aufblähen des intumeszierenden Materials in der angrenzenden Brandschutzmasseschicht wird verzögert und über eine größere Fläche verteilt. Die sich bildende Intumeszenzschicht bietet eine thermische Isolierung und verhindert den Durchtritt heißer Brandgase. Die an die aufgeblähte Brandschutzmasse angrenzende Schicht des Mineralfaser-Flächengebildes verteilt wiederum die durchtretende Wärme weiter und verzögert das Aufblähen der nächsten angrenzenden Brandschutzmasseschicht.

Das Raumgewicht des feuerhemmenden Flächenelements beträgt im Allgemeinen 100 bis 400 kg/m$^3$. Die unverdichteten feuerhemmenden Flächenelemente weisen meist ein Raumgewicht von 100-250 kg/m$^3$ auf. Das Flächenelement kann auch gewickelt oder durch Druck verdichtet werden, wobei die Fasern und die Brandschutzmasse zusammengedrückt werden. Man erreicht damit Raumgewichte von 200-400 kg/m$^3$. Das Raumgewicht ist definiert als das Gewicht des Flächenelements, bezogen auf seinen durch die Fläche und Dicke definierten Rauminhalt.

Das erfindungsgemäße feuerhemmende Flächenelement umfasst in bevorzugten Ausführungsformen mindestens drei Schichten des Mineralfaser-Flächengebildes, z.B. 3 bis 16 Schichten oder 6 bis 12 Schichten. Vorzugsweise sind die erste und letzte Schicht aus Mineralfaser-Flächengebilde gebildet. Die individuellen Schichten (a) bzw. (b) weisen in der Regel eine durchschnittliche Dicke von 1 bis 5 mm auf.

Die Mineralfaser-Flächengebilde sind insbesondere als Gewebe, Gewirke, Geflecht oder als Vlies ausgebildet. Eine zusätzliche Vernadelung ist ebenfalls möglich, jedoch nicht bevorzugt.

Die Mineralfaser-Flächengebilde sind vorzugsweise Flächengebilde aus Basaltfasern. Die eingesetzten Basaltfasern sind endlosgezogene oder kurze Basaltfasern und werden typischerweise aus einer Basaltschmelze in großtechnischem Maßstab gewonnen und zu einem Vlies abgelegt. Bevorzugt sind Flächengebilde aus Stapelfasern mit 20-50 mm Länge, vorzugsweise mit einem Flächengewicht mit 100-300 g/m$^2$. Die Basaltfaser-Vliese sind vorzugsweise nicht verfestigt. Flächengebilde mit einem derartigen Flächengewicht aus nicht verfestigten Basaltfasern können beim Aufblähen der Brandschutzmasse nachgeben und einen höheren Brandschutzwiderstand erzeugen.

Die Brandschutzmasse umfasst ein organisches Bindemittel mit einem darin dispergierten, teilchenförmigen intumeszierenden Material. Das organische Bindemittel dient dazu, das intumeszierende Material unverlierbar als gleichmäßig aufgebrachte Schicht zwischen den Mineralfaser-Flächengebilden zu halten. Die Brandschutzmasse ist in einer Ausführungsform eine verfestigte Polymerdispersion mit darin dispergiertem Blähgraphit.

Blähgraphit ist kommerziell erhältlich. Zu dessen Herstellung wird Graphit chemisch behandelt, wobei sich Behandlungsmittel, wie Schwefel- und Stickstoffverbindungen, in die Gitterstruktur des Graphits einlagern, wodurch der Graphit blähfähig wird. Der Blähgraphit besitzt geeigneterweise eine gewichtsmittlere Korngröße von 30 bis 300 $\mu$m, bevorzugt von 50 bis 180 $\mu$m.

Vorzugsweise weist die verfestigte Polymerdispersion eine Schaumstruktur auf. Der Auftrag als Schaum gestattet einen gleichmäßigen Auftrag auf die unregelmäßige Oberfläche der Mineralfaser-Flächengebilde und verhindert übermäßiges Einsinken der Brandschutzmasse in das Mineralfaser-Flächengebilde.

Zur Ausbildung der Brandschutzmasseschicht wird das Bindemittel mit dem intumeszierenden Material zu einer Paste vermengt. In der Regel wird zur Herstellung der Paste eine Dispersion eines Bindemittels auf Wasserbasis verwendet. Insbesondere geeignet sind Polyacrylat-Dispersionen, Polyurethan-Dispersionen oder andere Kunstharz-Dispersionen. Die Dispersionen können einen Feststoffgehalt von 20 bis 70 Gew.-% aufweisen. Erfindungsgemäß geeignet ist z.B. Dicrylan AS (ERBA AG, Zürich, CH). Das Bindemittel wird vorzugsweise in einer Menge von 20 bis 70 Gew.-%, vorzugsweise 30 bis 50 Gew.-% verwendet, gerechnet als Feststoff bezogen auf den Feststoffgehalt der Paste. Das intumeszierende Material wird vorzugsweise in einer Menge von 25 bis 60 Gew.-% verwendet, bezogen auf den Feststoffgehalt der Paste.

Vorzugsweise wird der Paste ein Schaumstabilisator beigegeben. Geeignete Schaumstabilisatoren sind ausgewählt unter Fettsäuresalzen, wie Alkalistearaten, Ammoniumstearat, Fettalkoholen, Fettsäurealkanolamiden, Aminoxiden, Phosphinoxiden, Fettsäureamidopropylbetainen, Fettsäuretauriden Celluloseethern, Siliconpolyethercopolymere, Blockcopolymeren aus Ethylenoxid und Propylenoxid, wie Poloxamere, wobei in bevorzugten Poloxameren von 2 bis 130 Ethylenoxid-Einheiten und 10 bis 70 Propylenoxid-Einheiten enthalten sind. Als Schaumstabilisator besonders bevorzugt sind z.B. Ammoniumsalze einer $C_{10}$-$C_{22}$-Fettsäure, z.B. Ammoniumstearat. Ein verwendbares Handelsprodukt ist z.B. Dicrylan Stabilisator (ERBA AG, Zürich, CH). Der Schaumstabilisator wird vorzugsweise in einer Menge von 10 bis 40 Gew.-% , vorzugsweise 10 bis 20 Gew.-% in Bezug auf das Gesamtgewicht der Paste verwendet.

Falls gewünscht kann ein Schaumbildner mitverwendet werden. Geeignete Schaumbildner sind unter oberflächenaktiven Substanzen, hydrophilen Polymeren, proteinischen Schaumbildnern und Gemischen davon ausgewählt. Bevorzugte oberflächenaktive Substanzen sind anionische oberflächenaktive Substanzen und nichtionische oberflächenaktive Substanzen oder Gemische davon.

Durch mechanisches Aufschlagen kann eine stabile Schaumstruktur erzeugt werden. Die geschäumte Paste weist vorzugsweise ein Raumgewicht von 150-400g/l auf.

Falls erwünscht bzw. notwendig können weitere Zusatzstoffe, wie z.B. Verdicker, Vernetzer oder Pigmente zugegeben werden.

Die Paste wird z.B. mit einer Rakel gleichmäßig in der gewünschten Schichtdicke auf das Mineralfaser-Flächengebilde aufgetragen. Nach dem Trocknen werden mehrere Lagen des beschichteten Mineralfaser-Flächengebildes aufeinander gelegt. Vorzugsweise werden die äußeren Flächen von Mineralfaser-Flächengebilden gebildet. Dies kann erreicht werden, indem man als Abschluss ein unbeschichtetes Mineralfaser-Flächengebilde auflegt oder die letzte Lage des beschichteten Mineralfaser-Flächengebildes umgekehrt auflegt.

Das Schichtgebilde kann durch Druck verdichtet werden, z.B. mittels Walzen oder in einer Presse.

Die Erfindung wird durch die nachfolgenden Beispiele näher veranschaulicht.

Beispiel 1 - Ansetzen der Schaumpaste

Ein Blähgaphit-Schaum wird hergestellt aus 43,6% Ecoaphos BGM-62, 43,6% Polymerdispersion (Dicrylan AS; 40% Feststoffgehalt) und 12,8% eines Stabilisators. Die Mischung wird stark gerührt und mit Luft vermischt, bis ein stabiler Schaum mit einem Raumgewicht von etwa 250 g/L entsteht. Dieser Schaum wird für die Beschichtung verwendet.

Beschichtung

Ein Basalt-Vliesstoff mit ca. 150 g/m$^2$ Flächengewicht wird mittels Rakel mit einem vorstehend beschriebenen Schaum beschichtet und anschließend bei 140°C für 10 Minuten getrocknet. Nach Trocknung besitzt das beschichtete Vlies ein Flächengewicht von ca. 700 g/m$^2$

Aufbau eines mehrlagigen Flächenelements

Sechs Lagen beschichtete Basalt-Vliese werden aufeinander gelegt, so dass abwechselnd Basalt-Vlies und Blähgraphit-Schaum aufeinander folgen. Die letzte Lage wird verkehrtherum gelegt, so dass an beiden äußeren Flächen das Basaltvlies nach außen zeigt.

Brenntest:

Ein handelsüblicher Propangas-Bunsenbrenner wird horizontal auf maximale Brennleistung eingestellt und die Flamme auf die Fläche des Testmaterials gerichtet. Die Flamme hat eine Länge von 10 cm und einen Abstand zum Testmaterial von 4 cm. Dabei hat der Beflammungspunkt zu den Rändern mindestens einen Abstand von 10 cm. Auf der Rückseite wird der Temperaturanstieg als Funktion der Zeit (in Minuten) gemessen. Es wird die Temperatur am heißesten Punkt der nicht-beflammten Rückseite des Testmaterials gemessen.
Um unterschiedlich aufgebaute Materialien hinsichtlich ihres Feuerwiderstands bewerten zu können, wurde der Wärmedurchgangswert (WDW) berechnet.
Der WDW wurde definiert als die Zeit bis zum Erreichen einer Temperaturerhöhung von 140 K auf der nicht beflammten Rückseite, im Verhältnis zu Dicke und Flächengewicht des Materials. Der WDW wird angegeben in min * m/kg:

$$ WDW = \frac{t\ (min)}{Dicke\ (m)\ x\ Flächengewicht\ (kg/m^2)} $$

t = Zeit bis zum Erreichen einer Temperaturerhöhung um 140 K

Tabelle der WDW Werte:

| MATERIAL - AUFBAU | Dicke cm | Flächengewicht Kg/m$^2$ | WDW |
|---|---|---|---|
| Feuerschutzplatte (1,2 cm)* | 1,2 | 13,13 | 14 |
| Glaswolle | 5,0 | 0,600 | 14 |
| 6 Lagen Basalt-Graphit, unverdichtet | 2,2 | 4,20 | > 2000 |
| * Handelsübliche Gipskartonplatte Feuerschutz DIN 18180 | | | |

**Patentansprüche**

1.  Feuerhemmendes Flächenelement mit alternierenden Schichten

    (a) eines Mineralfaser-Flächengebildes und
    (b) einer Brandschutzmasse, welche ein organisches Bindemittel mit einem darin dispergierten intumeszierenden Material umfasst.

2.  Feuerhemmendes Flächenelement nach Anspruch 1, wobei die Mineralfaser-Flächengebilde Flächengebilde aus nicht verfestigten Basaltfasern mit einem Flächengewicht von 100-300 g/m$^2$ sind.

3.  Feuerhemmendes Flächenelement nach Anspruch 1 oder 2, wobei die Brandschutzmasse eine verfestigte Polymerdispersion mit darin dispergiertem Blähgraphit ist.

4.  Feuerhemmendes Flächenelement nach Anspruch 3, wobei der Blähgraphit eine Korngröße von 30 bis 300 μm besitzt, bevorzugt von 50 bis 180 μm.

5.  Feuerhemmendes Flächenelement nach Anspruch 3, wobei die verfestigte Polymerdispersion eine Schaumstruktur aufweist.

6.  Feuerhemmendes Flächenelement nach Anspruch 5, wobei die Brandschutzmasse ein Raumgewicht von 150-400 g/L aufweist.

7.  Feuerhemmendes Flächenelement nach einem der vorhergehenden Ansprüche, wobei die individuellen Schichten (a) bzw. (b) eine durchschnittliche Dicke von 1 bis 5 mm aufweisen.

8.  Feuerhemmendes Flächenelement nach einem der vorhergehenden Ansprüche, welches mindestens drei Schichten des Mineralfaser-Flächengebildes umfasst.

9.  Feuerhemmendes Flächenelement nach einem der vorhergehenden Ansprüche, wobei die erste und letzte Schicht aus Mineralfaser-Flächengebilde gebildet ist.

10. Feuerhemmendes Flächenelement nach einem der vorhergehenden Ansprüche, welches als Rollenware auf- und abwickelbar ist.

11. Feuerhemmendes Flächenelement nach einem der vorhergehenden Ansprüche, mit einem Raumgewicht von 100 bis 400 kg/m$^3$.

Europäisches
Patentamt

European
Patent Office

Office européen
des brevets

# EUROPÄISCHER RECHERCHENBERICHT

Nummer der Anmeldung

EP 19 15 1389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 514 488 A2 (HILTI AG [LI]) 24. Oktober 2012 (2012-10-24) * Absatz [0017] - Absatz [0019] * * Absatz [0025] - Absatz [0027] * * Absatz [0032] - Absatz [0037] * * Ansprüche 1-22 * * Absatz [0014] * ----- | 1-11 | INV. B32B5/24 B32B5/26 |
| X | EP 0 224 484 A1 (DIXON INTERNATIONAL LTD [GB]) 10. Juni 1987 (1987-06-10) * Ansprüche 1, 9 * * Spalte 3, Zeilen 9-23 * ----- | 1 | |
| X | DE 43 27 280 A1 (PILKINGTON PLC [GB]; PILKINGTON INSULATION LTD [GB]) 17. Februar 1994 (1994-02-17) * Spalte 7, Zeilen 50-64 * * Spalte 6, Zeilen 48-65 * ----- | 1 | |

**RECHERCHIERTE SACHGEBIETE (IPC)**

B32B

Der vorliegende Recherchenbericht wurde für alle Patentansprüche erstellt

| Recherchenort | Abschlußdatum der Recherche | Prüfer |
|---|---|---|
| Den Haag | 24. Juni 2019 | Weiss, Felix |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**
EP 19 15 1389

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2019

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 2514488 | A2 | 24-10-2012 | DE | 102011007654 | A1 | 08-11-2012 |
|  |  |  | EP | 2514488 | A2 | 24-10-2012 |
|  |  |  | PL | 2514488 | T3 | 29-03-2019 |
| EP 0224484 | A1 | 10-06-1987 | AU | 4672485 | A | 25-02-1986 |
|  |  |  | CA | 1275897 | C | 06-11-1990 |
|  |  |  | DE | 3580045 | D1 | 08-11-1990 |
|  |  |  | EP | 0224484 | A1 | 10-06-1987 |
|  |  |  | GB | 2189796 | A | 04-11-1987 |
|  |  |  | JP | S61502824 | A | 04-12-1986 |
|  |  |  | NZ | 212878 | A | 06-01-1989 |
|  |  |  | WO | 8600915 | A1 | 13-02-1986 |
|  |  |  | ZA | 8505630 | B | 30-04-1986 |
| DE 4327280 | A1 | 17-02-1994 | DE | 4327280 | A1 | 17-02-1994 |
|  |  |  | GB | 2269548 | A | 16-02-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016225906 A1
- DE 102010048175 B4
- DE 19833898 A1
- DE 29613507 U1
- DE 4142903 A1
- DE 3423700 C2
- CN 104847026